# EUROPEAN PATENT APPLICATION

(11) **EP 1 816 607 A2**
(43) Date of publication of application: **08.08.2007**
(21) Application number: 06253639.6
(22) Date of filing: 12.07.2006
(51) Int. Cl.: G06T 17/40

(54) **Graphics processing apparatus, method and program for constrained manipulation of 3D objects**

(30) Priority: 06.02.2006 JP 2006028975
(71) Applicant: FUJITSU LIMITED, Kawasaki-shi, Kanagawa 211-8588 (JP)
(72) Inventor: Tokumaru, Takayuki c/o Fujitsu Kyushu System E. Ltd. ..., Fukuoka 814-8589 (JP)
(74) Representative: Hitching, Peter Matthew

(57) **Abstract**

An input section (3) allows a user to input an input signal including selection information and operational direction information. A dimensional constraint data storing section (4) stores dimensional constraint data of a graphic object. An extent data storing section stores extent data of the graphic object. An arithmetic section (5) determines a moving direction of a selected graphic object on the basis of the dimensional constraint data and data of an initial moving direction. The selected graphic object is detected on the basis of the selection information. The initial moving direction is detected on the basis of the operational direction information. The arithmetic section generates data representing arrangement of a scale along the moving direction of the selected graphic object.

## Description

The present invention relates to a graphics processing apparatus and a graphics processing method enabling a dimensionally constrained graphic object in 3-dimensional CAD to be moved to a desired position by user's operations.

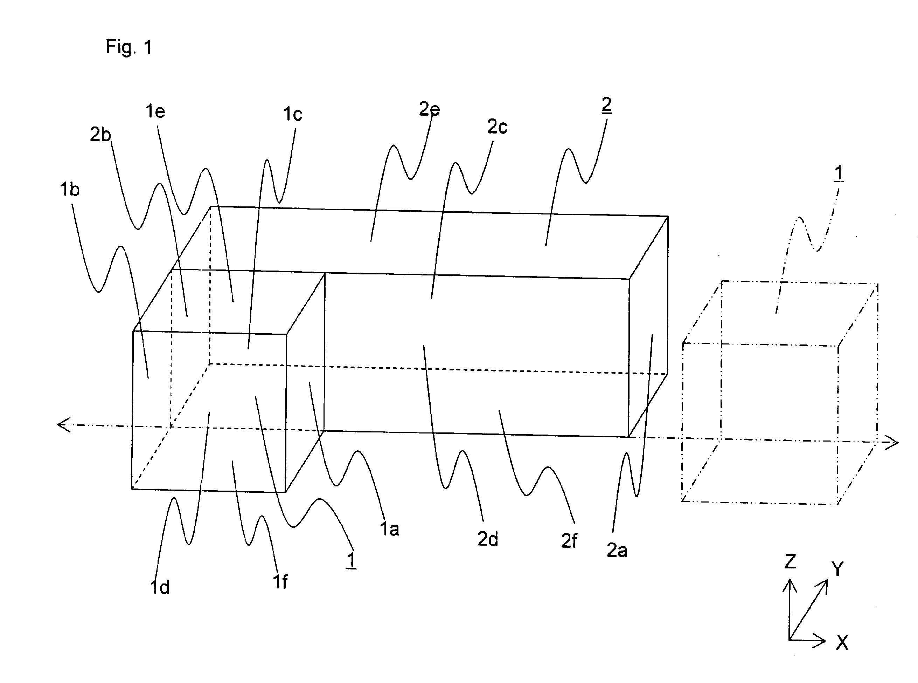

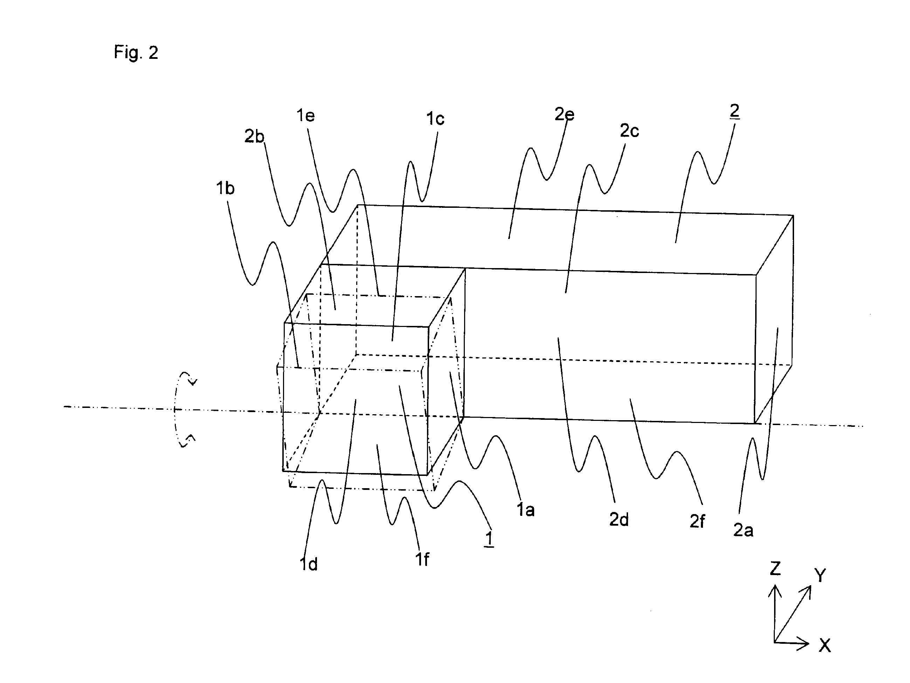

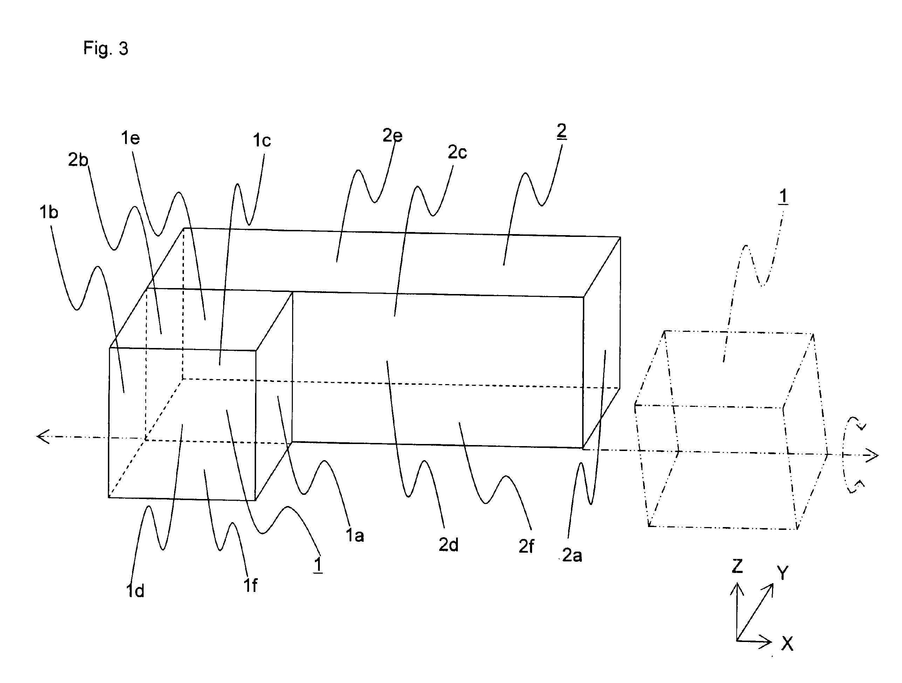

In conventional graphics display devices, when changing a display state of a 3-dimensional graphic object, a 3-demensional shape, into which a coordinate system indicating a direction of the change and items to be changed are integrated, is displayed. Then, by selecting visualized tools, the display state of the 3-dimensional graphic object is changed. This allows a user to instinctively know the change items and the coordinate system (see, for example, Japanese Unexamined Patent Application Publication No. 8-297750, p. 3 line 25 in the right column - p.4 line 7 in the left column, and Fig. 1). As other examples, there are a mouse for inputting posture (see, for example, Japanese Unexamined Patent Application Publication No. 5-173705, p. 2 lines 24-36 in the right column, and Fig. 2) that allows the graphic object to be translated or rotated using a special mouse device having four mouse balls and a graphics display device (see, for example, Japanese Unexamined Patent Application Publication No. 8-138084, p. 3 lines 29-38 in the left column, and Fig. 3) that determines a sight line vector on the basis of the view coordinate system specified by the user and limits movable directions of the sight line by selecting a mouse button.

In conventional graphics display devices, when changing a display state of a 3-dimensional graphic object, i.e., a target of the operation, a user selects a visualized tool to specify a coordinate system (X-axis, Y-axis, or Z-axis) indicating a direction of the change of the graphic object and items to be changed (display for translation, rotation, or scaling) in advance, and moves a mouse. Accordingly, the user has to perform an additional operation for selecting the visualized tool. Thus, there is a problem of making the user's operation troublesome.

In addition, in occasions other than those where translation, rotation, or a scale change is performed on 3-dimensional graphic object with respect to the X-axis, Y-axis, or Z-axis, it is necessary to select a plurality of axes. This also causes a problem of making the user's operation troublesome.

Furthermore, regarding a moving operation of a mouse, it is very difficult to place a movement target point (hereinafter, referred to as an end point) of a mouse pointer exactly at a desired position. Thus, there is a problem that the user cannot move the 3-dimensional graphic object accurately.

It is desirable to provide a user with an easy operation in changing a display state of a 3-dimensional graphic object. For example, it is desirable to provide a graphics processing apparatus capable of controlling a direction of translation, rotation, or a scale change of a graphic object without performing an operation for selecting a tool visualized as a 3-dimensional shape into which a coordinate system indicating a direction of the change and items to be changed are integrated. It is also desirable to provide a graphics processing method capable of improving its operability.

Additionally, or alternatively, for example, it is desirable to provide a graphics processing apparatus allowing a user to move a graphic object to a desired position without specifying a moving distance, a rotation angle or a scalewidth by inputting a numerical value and without using a special mouse device.

A graphics processing apparatus according to an embodiment of a first aspect of the present invention includes: an input means for allowing a user to select at least one of the objects and to input movement data indicative of movement of the selected object; a constraint data storing means for storing constraint data of dimensional constraint conditions of the objects, said dimensional constraint conditions restricting relative movement of the objects; and an arithmetic means for determining actual movement of the selected object on the basis of the movement data and the constraint data.

A graphics processing method according to an embodiment of a second aspect of the present invention includes: a step of storing constraint data of dimensional constraint conditions of the objects in a first storage means, said dimensional constraint conditions restricting relative movement of the objects; a step of allowing a user to select at least one of the objects, and to input movement data indicative of movement of the selected object; a step of acquiring the constraint data from the constraint data storing means; and a step of determining actual movement of the selected object on the basis of the movement data and the constraint data.

An embodiment of the present invention allows the apparatus to determine the moving direction of the selected graphic object on the basis of the movement data given by the user and the constraint data stored in the apparatus, and enables the graphic object to be moved to a desired position by the scale displayed along the moving direction of the graphic object.

Reference will now be made, by way of example, to the accompanying drawings, in which:
Fig. 1 is an explanatory drawing for explaining dimensional constraints allowing a graphic object to be translated in an X-axis direction.
Fig. 2 is an explanatory drawing for explaining dimensional constraints allowing a graphic object to be rotated around an X-axis.
Fig. 3 is an explanatory drawing for explaining dimensional constraints allowing a graphic object to be translated in an X-axis direction and rotated around the X-axis.
Fig. 4 is an explanatory drawing for explaining dimensional constraints allowing a graphic object to be translated in a Y-axis direction.
Fig. 5 is an explanatory drawing for explaining dimensional constraints allowing a graphic object to be rotated around a Z-axis.
Fig. 6 is an explanatory drawing for explaining dimensional constraints allowing a graphic object to be translated in a Z-axis and rotated around the Z-axis.
Fig. 7 is an explanatory drawing for explaining dimensional constraints preventing a graphic object from being moved.
Fig. 8 is a block diagram showing an entire configuration of a system of a graphics processing apparatus in a first embodiment of the present invention.
Fig. 9 is a block diagram showing a detailed configuration of an arithmetic section of a graphics processing apparatus shown in Fig. 8.
Fig. 10 is a flowchart diagram showing a process in a graphics processing apparatus in a first embodiment of the present invention.
Fig. 11A is a diagram showing a moving procedure when a graphic object is translatable, and is an explanatory diagram showing a first step S1.
Fig. 11B is a diagram showing a moving procedure when a graphic object is translatable, and is an explanatory diagram showing a second step S2.
Fig. 12A is a diagram showing a moving procedure when a graphic object is translatable, and is an explanatory diagram showing a second step S2.
Fig. 12B is a diagram showing a moving procedure when a graphic object is translatable, and is an explanatory diagram showing a third step S3.
Fig. 13 is a diagram showing a moving procedure when a graphic object is translatable, and is an explanatory diagram showing a fourth step S4.
Fig. 14 is a block diagram showing an entire configuration of a graphics processing apparatus in a second embodiment of the present invention.
Fig. 15 is a block diagram showing a detailed configuration of an arithmetic section of a graphics processing apparatus shown in Fig. 14.
Fig. 16 is a flowchart diagram showing a process in a graphics processing apparatus in a second embodiment of the present invention.
Fig. 17A is a diagram showing a moving procedure when a graphic object is translatable, and is an explanatory diagram showing a first step S1.
Fig. 17B is a diagram showing a moving procedure when a graphic object is translatable, and is an explanatory diagram showing a second step S2.
Fig. 18A is a diagram showing a moving procedure when a graphic object is translatable, and is an explanatory diagram showing a second step S2.
Fig. 18B is a diagram showing a moving procedure when a graphic object is translatable, and is an explanatory diagram showing a third-a step S3a.
Fig. 19A is a diagram showing a moving procedure when a graphic object is translatable, and is an explanatory diagram showing a third-b step S3b.
Fig. 19B is a diagram showing a moving procedure when a graphic object is translatable, and is an explanatory diagram showing a fourth step S4.
Fig. 20A is a diagram for explaining intervals of a movement based on a size of the scaled image of the selected graphic object, and is an explanatory diagram showing a state before enlarging a display screen.
Fig. 20B is a diagram for explaining intervals of a movement based on a size of the scaled image of the selected graphic object, and is an explanatory diagram showing a state after enlarging a display screen.
Fig. 21A is a diagram showing a moving procedure when a graphic object is translatable and rotatable, and is an explanatory diagram showing a first step S1.
Fig. 21B is a diagram showing a moving procedure when a graphic object is translatable and rotatable, and is an explanatory diagram showing a second step S2.
Fig. 22A is a diagram showing a moving procedure when a graphic object is translatable and rotatable, and is an explanatory diagram showing a second step S2.
Fig. 22B is a diagram showing a moving procedure when a graphic object is translatable and rotatable, and is an explanatory diagram showing a third-a step S3a.
Fig. 23A is a diagram showing a moving procedure when a graphic object is translatable and rotatable, and is an explanatory diagram showing a third-b step S3b.
Fig. 23B is a diagram showing a moving procedure when a graphic object is translatable and rotatable, and is an explanatory diagram showing a fourth step S4.
Fig. 24 is a diagram showing a typical computer environment.

### First Embodiment of the Present Invention

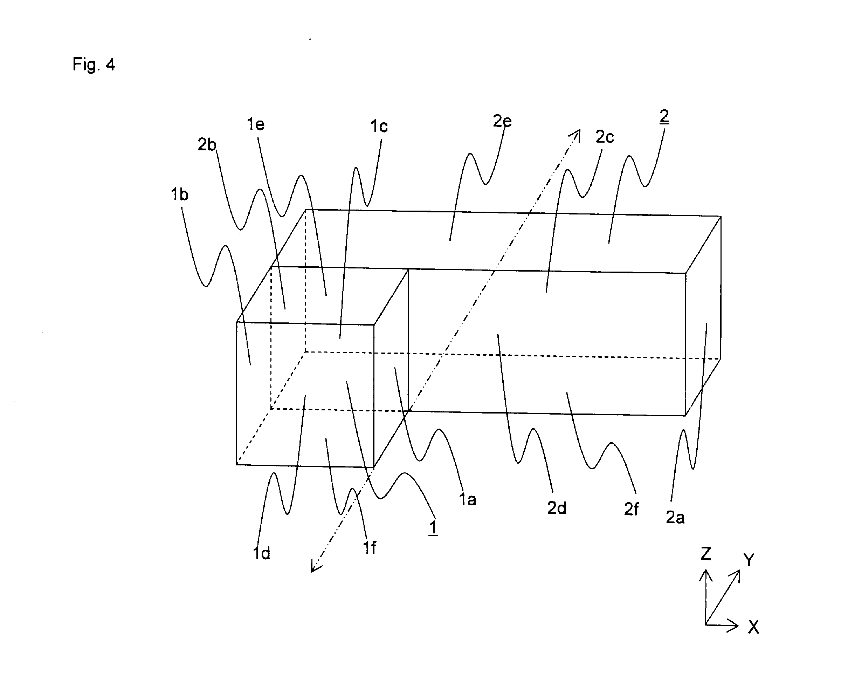

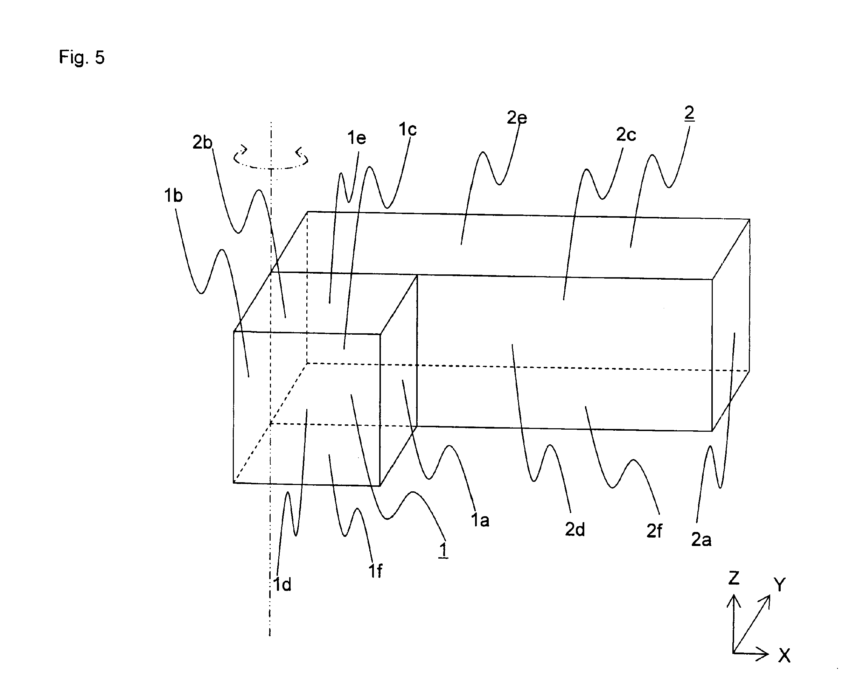

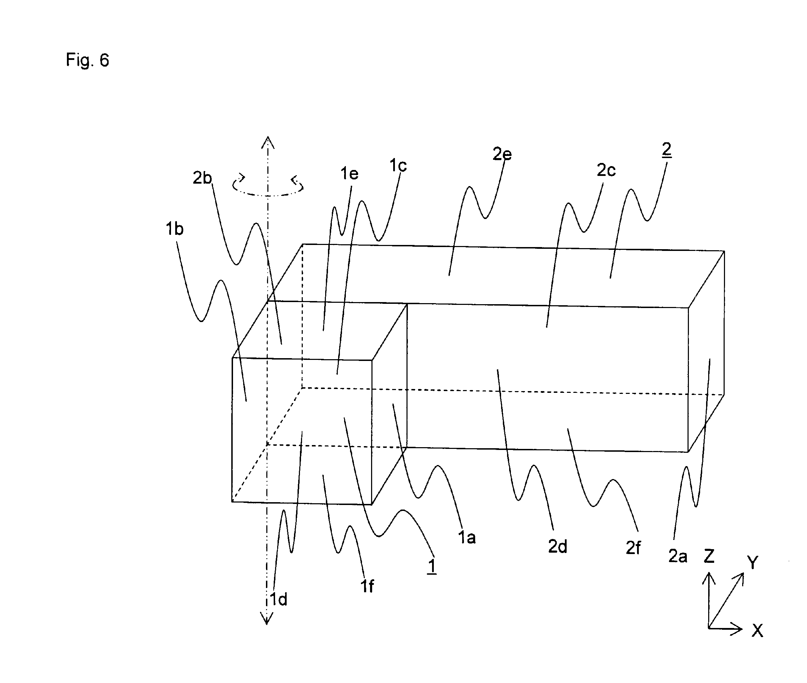

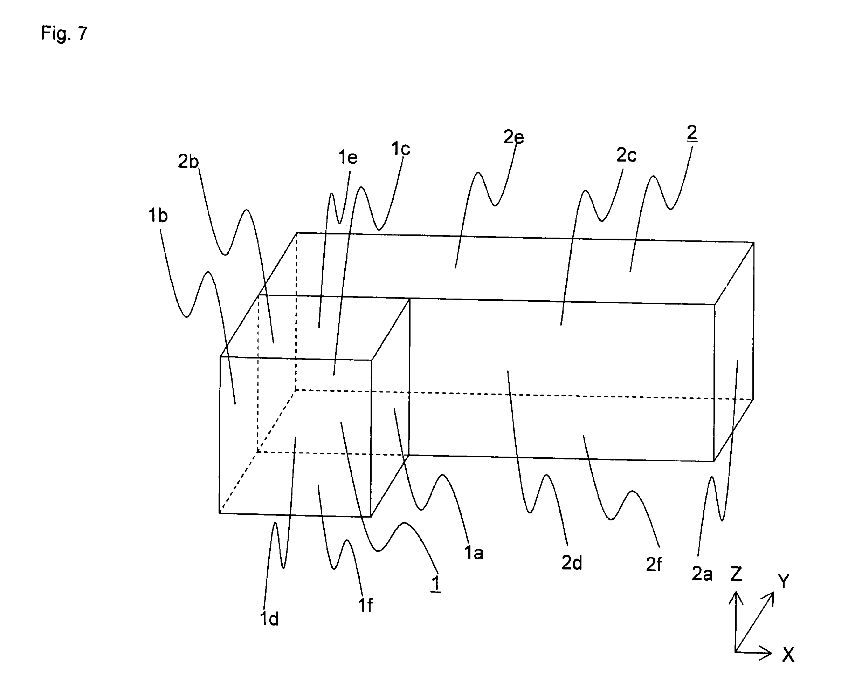

Fig. 1 is an explanatory drawing for explaining dimensional constraints allowing a graphic object to be translated in an X-axis direction. Fig. 2 is an explanatory drawing for explaining dimensional constraints allowing a graphic object to be rotated around the X-axis. Fig. 3 is an explanatory drawing for explaining dimensional constraints allowing a graphic object to be translated in the X-axis direction and rotated around the X-axis. Fig. 4 is an explanatory drawing for explaining dimensional constraints allowing a graphic object to be translated in a Y-axis direction. Fig. 5 is an explanatory drawing for explaining dimensional constraints allowing a graphic object to be rotated around a Z-axis. Fig. 6 is an explanatory drawing for explaining dimensional constraints allowing a graphic object to be translated in the Z-axis direction and rotated around the Z-axis. Fig. 7 is an explanatory drawing for explaining dimensional constraints preventing a graphic object from being moved.

In Fig. 1 to Fig. 7, a target graphic object 1 is a target graphic object on which processing such as translation, rotation, or a scale change (hereinafter, referred to as moving processing) is performed. In addition, a reference graphic object 2 is a graphic object to be referred to in order to constrain the target graphic object 1 by the dimensional constraints. Herein, the dimensional constraints are arrangement conditions that relate the target graphic object 1 and the reference graphic object 2 to specify a moving direction when the moving processing is performed on the target graphic object 1. For example, as shown in Fig. 1 to Fig. 7, there are the dimensional constraints for constraining the moving direction of the target graphic object 1.

Furthermore, for ease of explanation, the target graphic object 1 and the reference graphic object 2 are shown as rectangular parallelepipeds. However, the target graphic object 1 and the reference graphic object 2 are not limited to the rectangular parallelepipeds. For example, the target graphic object 1 and the reference graphic object 2 may be line segments of straight or curved lines, planes or curved surfaces including a surface enclosed by curved lines or polygons, or solid bodies including polyhedrons or spheres.

Moreover, in Fig. 1 to Fig. 7, among arrows shown in solid lines, X, Y, and Z indicates the X-axis, the Y-axis, and the Z-axis, respectively. A Direction of each arrow indicates the positive direction. Additionally, an arrow shown in a two-dot chain line indicates a movable direction of the target graphic object 1.

In addition, six faces of the target graphic object 1 are a face 1a and a face 1b, perpendicular to the X-axis and facing each other, a face 1c and a face 1d, perpendicular to the Y-axis and facing each other, and a face 1e and a face 1f, perpendicular to the Z-axis and facing each other. The faces in the positive side of the axes are denoted by the faces 1a, 1c, and 1e.

Furthermore, six faces of the reference graphic object 2 are a face 2a and a face 2b, perpendicular to the X-axis and facing each other, a face 2c and a face 2d, perpendicular to the Y-axis and facing each other, and a face 2e and a face 2f, perpendicular to the Z-axis and facing each other. The faces in the positive side of the axes are denoted by the faces 2a, 2c, and 2e.

As shown in Fig. 1, a line segment (edge) touching the face 1c and the face 1e of the target graphic object 1 and a line segment (edge) touching the face 2d and the face 2e of the reference graphic object 2 lie on a common line. Additionally, the face 1d of the target graphic object 1 and the face 2d of the reference graphic object 2 are parallel. Accordingly, the dimensional constraints enabling the translation only in the X-axis direction are tied onto the target graphic object 1.

In addition, as shown in Fig. 2, a line segment (edge) touching the face 1c and the face 1f of the target graphic object 1 and a line segment (edge) touching the face 2d and the face 2f of the reference graphic object 2 lie on a common line. Additionally, the face 1b of the target graphic object 1 and the face 2b of the reference graphic object 2 lie on a common plane. Accordingly, the dimensional constraints enabling the rotation only around the X-axis are tied onto the target graphic object 1.

Furthermore, as shown in Fig. 3, the line segment (edge) touching the face 1c and the face 1f of the target graphic object 1 and the line segment (edge) touching the face 2d and the face 2f of the reference graphic object 2 lie on a common line. Accordingly, the dimensional constraints enabling the translation in the X-axis direction and the rotation around the X-axis are tied onto the target graphic object 1.

In Fig. 1 to Fig. 3, the dimensional constraints are tied onto the target graphic object 1 by a relation between the line segment (edge) of the target graphic object 1 and the line segment (edge) of the reference graphic object 2 or a relation between the face of the target graphic object 1 and the face of the reference graphic object 2. However, the dimensional constraints may be tied onto the target graphic object 1 by a relation between a point (vertex) of the target graphic object 1 and a point (vertex) of the reference graphic object 2. Alternatively, the dimensional constraints may be tied onto the target graphic object 1 by relating the line segment or face of the reference graphic object 2 to the point of the target graphic object 1, relating the face or point of the reference graphic object 2 to the line segment of the target graphic object 1, relating the point or line segment of the reference graphic object 2 to the face of the target graphic object 1, or combining a plurality of these relations.

The specific relations between the target graphic object 1 and the reference graphic object 2 include, for example, the followings. Regarding a point and a point, there is a relation where the two points agree or disagree. Regarding a point and a line segment, there is a relation where the point lies on the line segment, lies on a straight line including the line segment, or does not lie on the straight line. Regarding a point and a face, there is a relation where the point lies on the face, lies on a common plane including the face, or does not lie on the plane. Regarding a line segment and a line segment, there is a relation where the line segments agrees, extending directions thereof are parallel, the line segments are on a common line, the extending directions thereof disagree, or the line segments intersect. Regarding a line segment and a face, there is a relation where the line segment lies on the face, lies on a plane including the face, is parallel to the face, intersects with the face, or intersects with the plane including the face. Regarding a face and a face, there is a relation where the faces agree, lie on a common plane, are parallel, or intersect.

In Fig. 1 to Fig. 3, the translation, the rotation, and the translation and rotation with respect to the X-axis are described. However, the dimensional constraints for the translation, the rotation, and the translation and rotation with respect to the Y-axis or the Z-axis can be tied onto the target graphic object 1 likewise.

For example, as shown in Fig. 4, the face 1b of the target graphic object 1 and the face 2b of the reference graphic object 2 lie on a common plane, and the face 1e of the target graphic object 1 and the face 2e of the reference graphic object 2 lie on another common plane. Thus, the dimensional constraints enabling the translation only in the Y-axis direction are tied onto the target graphic object 1.

Additionally, as shown in Fig. 5, a line segment (edge) touching the face 1b and the face 1c of the target graphic object 1 and a line segment (edge) touching the face 2b and the face 2d of the reference graphic object 2 lie on a common line. In addition, the face 1e of the target graphic object 1 and the face 2e of the reference graphic object 2 lie on a common plane. Accordingly, the dimensional constraints enabling the rotation only around the Z-axis are tied onto the target graphic object 1.

Furthermore, as shown in Fig. 6, the line segment (edge) touching the face 1b and the face 1c of the target graphic object 1 and the line segment (edge) touching the face 2b and the face 2d of the reference graphic object 2 lie on a common line. In addition, the face 1e of the target graphic object 1 and the face 2e of the reference graphic object 2 are parallel. Accordingly, the dimensional constraints enabling the translation in the Z-axis direction and the rotation around the Z-axis are tied onto the target graphic object 1.

Moreover, as shown in Fig. 7, the line segment (edge) touching the face 1b and the face 1c of the target graphic object 1 and the line segment (edge) touching the face 2b and the face 2d of the reference graphic object 2 lie on a common line. Also, the line segment (edge) touching the face 1c and the face 1e of the target graphic object 1 and the line segment (edge) touching the face 2d and the face 2e of the reference graphic object 2 lie on another common line. Accordingly, the dimensional constraints preventing the target graphic object 1 from being moved are tied onto the target graphic object 1.

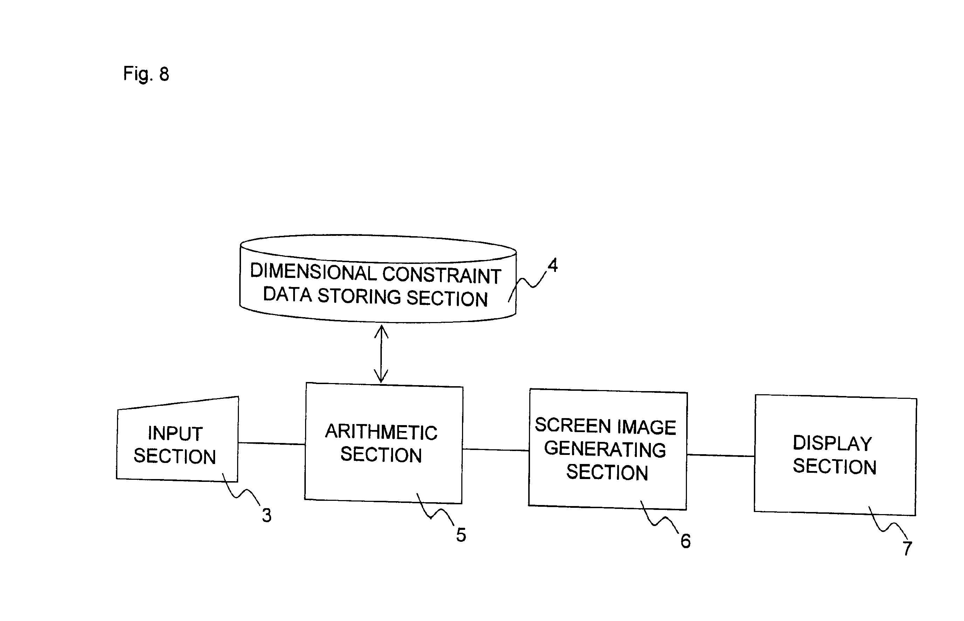

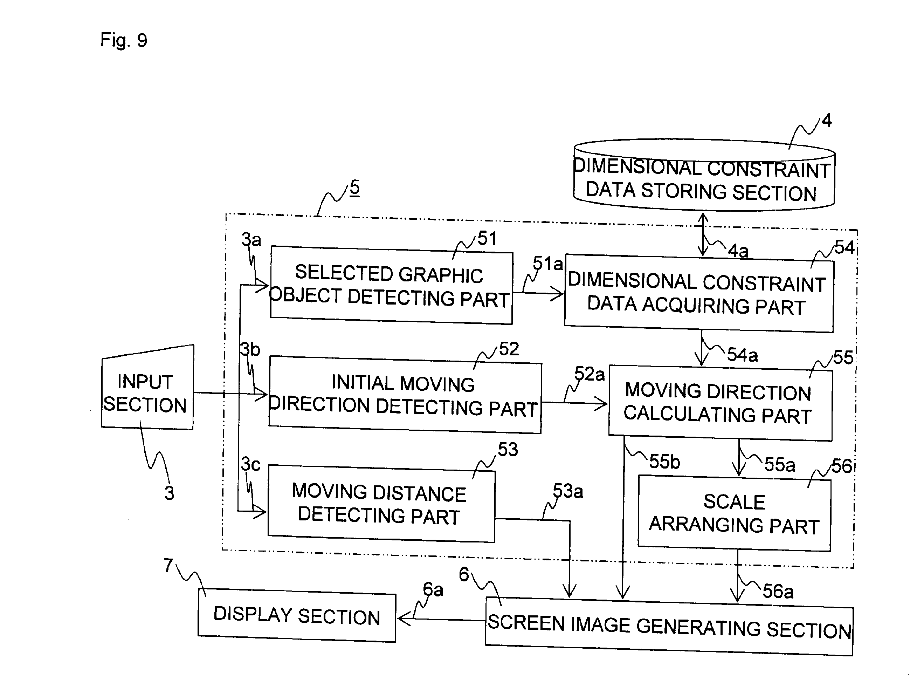

Referring to Fig. 8 and Fig. 9, a system configuration of a graphics processing apparatus in the first embodiment of the present invention will be described next.

Fig. 8 is a block diagram showing an entire configuration of a graphics processing apparatus in a first embodiment of the present invention. Fig. 9 is a block diagram showing a detailed configuration of an arithmetic section of a graphics processing apparatus shown in Fig. 8.

An input section 3 is an input means for allowing a user to input a signal including selection information 3a obtained when a target graphic object 1 is selected, operational direction information 3b and operational distance information 3c obtained when the target graphic object 1 is moved. The input section 3 may be, for example, a mouse or the like.

If the input section 3 is a mouse, the target graphic object 1 is selected by, for example, clicking with the mouse after placing an indicator 8, such as a mouse pointer, which moves in response to the mouse movements, over the target graphic object 1 on a display screen of a display section 7 described below. With this operation, the selection information 3a is obtained. Additionally, by starting dragging (hereinafter, the point where the dragging is started is referred to as a start point) while clicking with the mouse after placing the mouse pointer over the target graphic object 1 and dropping at a desired position (an end point), the target graphic object 1 is moved. With this operation, the operational direction information 3b is obtained on the basis of the moving direction from the start point. In addition, the operational distance information 3c is obtained on the basis of a direct distance between the start point and the end point.

A dimensional constraint data storing section 4 is a storage means storing a plurality of dimensional constraint data 4a described above.

The arithmetic section 5 is an arithmetical means for performing arithmetic operations referring to the dimensional constraint data 4a. The arithmetic section 5 includes a selected graphic object detecting part 51, an initial moving direction detecting part 52, and a moving distance detecting part 53. The selected graphic object detecting part 51 detects the target graphic object 1 on the basis of the selection information 3a supplied from the input section 3. The initial moving direction detecting part 52 detects the initial moving direction on the basis of the operational direction information 3b supplied from the input section 3. The moving distance detecting part 53 detects the moving distance on the basis of the operational distance information 3c supplied from the input section 3. The initial moving direction is a direction initially given to the input section 3 (a mouse, for example), from the start point, as well as a direction given to the indicator 8 (a mouse pointer, for example) moving in response to data supplied from the input section 3.

The arithmetic section 5 also includes a dimensional constraint data acquiring part 54, a moving direction calculating part 55, and a scale arranging part 56. The dimensional constraint data acquiring part 54 acquires the dimensional constraint data 4a specific to the target graphic object 1 from the dimensional constraint data storing section 4 on the basis of selected graphic object data 51a supplied from the selected graphic object detecting part 51. The moving direction calculating part 55 calculates the moving direction of the target graphic object 1 on the basis of a first data 54a supplied from the dimensional constraint data acquiring part 54 and a second data 52a supplied from the initial moving direction detecting part 52. The scale arranging part 56 sends, to a screen image generating section 6 described below, data 56a for displaying a scale along the moving direction of the target graphic object 1 on the basis of a third data 55a supplied from the moving direction calculating part 55.

The screen image generating section 6 is a means for generating a screen image on the basis of data 53a supplied from the moving distance detecting part 53, data 55b supplied from the moving direction calculating part 55, and data 56a supplied from the scale arranging part 56. The data 53a, 55b, and 56a are arithmetical results in the arithmetic section 5.

The display section 7 is a display means such as a CRT display or a liquid crystal display.

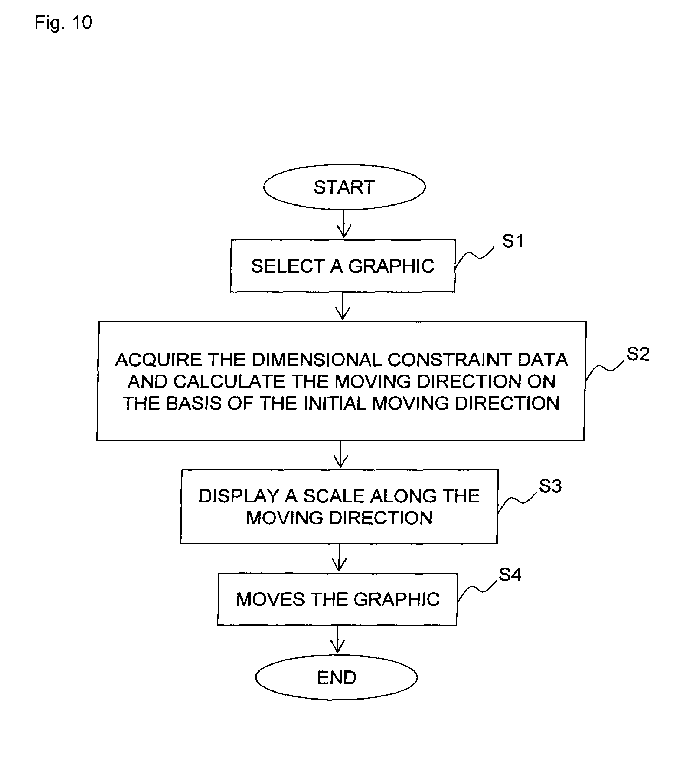

Referring to Fig. 10 to Fig. 13, a process in a graphics processing apparatus and a graphics processing method for performing the moving processing of a target graphic object 1 will be described next.

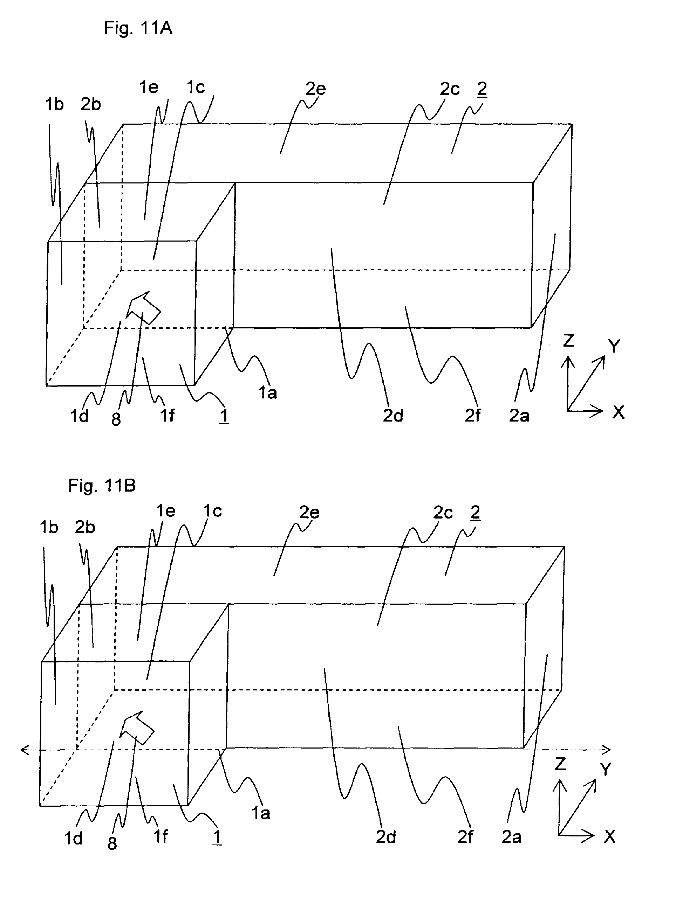

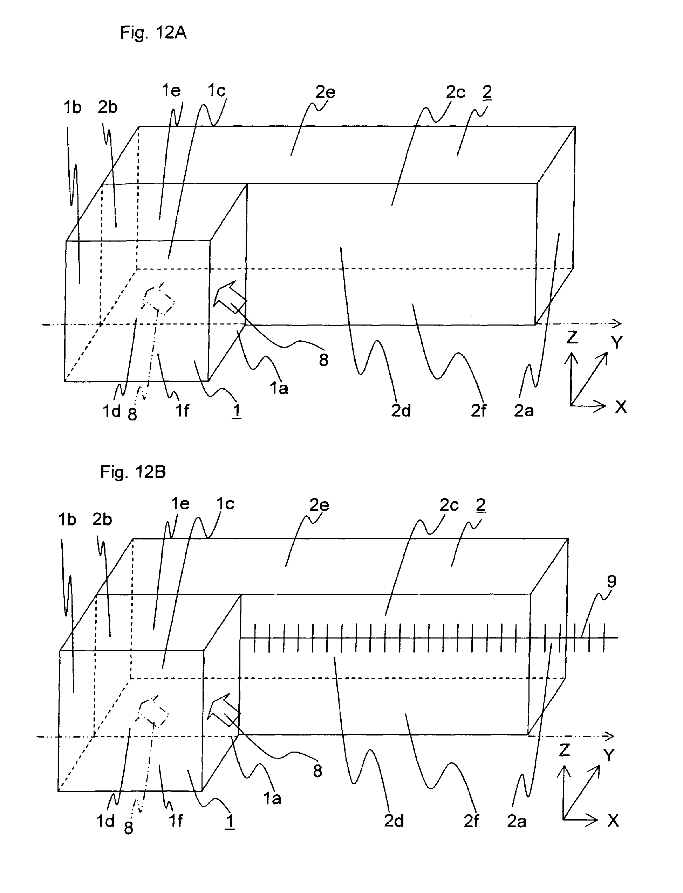

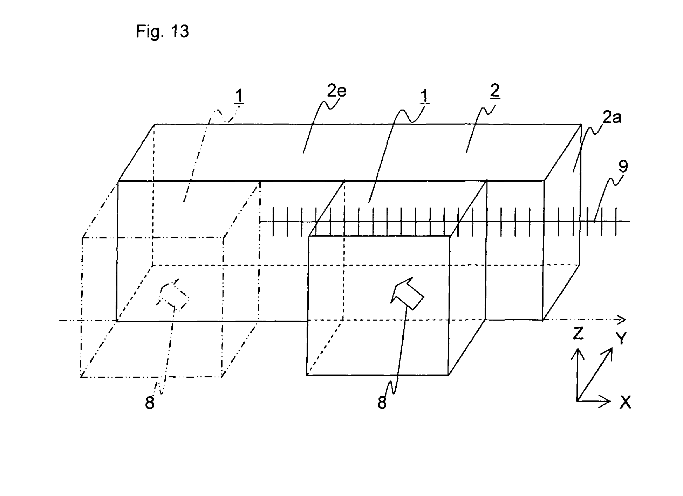

Fig. 10 is a flowchart diagram showing a process in the graphics processing apparatus in a first embodiment of the present invention. Fig. 11A is a diagram showing a moving procedure when a graphic object is translatable, and is an explanatory diagram showing a first step S1. Fig. 11B is a diagram showing a moving procedure when a graphic object is translatable, and is an explanatory diagram showing a second step S2. Fig. 12A is a diagram showing a moving procedure when a graphic object is translatable, and is an explanatory diagram showing the second step S2. Fig. 12B is a diagram showing a moving procedure when a graphic object is translatable, and is an explanatory diagram showing a third step S3. Fig. 13 is a diagram showing a moving procedure when a graphic object is translatable, and is an explanatory diagram showing a fourth step S4. In Fig. 10 to Fig. 13, the same reference numerals as shown in Fig. 1 to Fig. 9 indicate the same or corresponding parts, thus the explanation for those is omitted.

First, a user selects a target graphic object 1 on which the user desires to perform the moving processing among graphic objects displayed on a display screen of the display section 7 with the input section 3. In this case, the user selects the target graphic object 1 via the input section 3 while watching an indicator 8 moving on the display screen of the display section 7 in response to data supplied from the input section 3 (at the first step S1, and Fig. 11A). If the input section 3 is a mouse, the user selects the target graphic object 1 by clicking with the mouse after placing the mouse pointer over the target graphic object 1 on the display screen of the display section 7.

Next, the arithmetic section 5 acquires the dimensional constraint data 4a tied onto the target graphic object 1 from the dimensional constraint data storing section 4. The moving direction calculating part 55 calculates the moving direction of the target graphic object 1 on the basis of the initial moving direction of the indicator 8 relative to the target graphic object 1 (at the second step S2, Fig. 11B, and Fig. 12A). If the input section 3 is a mouse, the initial moving direction is the direction in which the user starts dragging while clicking with the mouse after placing the mouse pointer over the target graphic object 1.

Meanwhile, in Fig. 11 to Fig. 13, the dimensional constraints enabling the translation only in the X-axis direction are tied onto the target graphic object 1. Thus, if the user moves the indicator 8 so that the initial moving direction of the indicator 8 is the substantially right direction (to the right, above to the right, or below to the right) from the start point on the display screen, the moving direction of the target graphic object 1 is parallel to and the positive direction of the X-axis. In contrast, if the user moves the indicator 8 so that the initial moving direction of the indicator 8 is the substantially left direction (to the left, above to the left, or below to the left) from the start point on the display screen, the moving direction of the target graphic object 1 is parallel to and the negative direction of the X-axis.

Then, the display section 7 displays a scale 9 along the moving direction of the target graphic object 1 (at the third step S3, and Fig. 12B). More specifically, in Fig. 12B, a length scale 9 is displayed along the direction parallel to the X-axis and in the positive direction of the X-axis, i.e., the moving direction of the target graphic object 1.

Lastly, the user moves the target graphic object 1 to the desired position on the scale 9, which is a guide of the movement, via the input section 3 while watching the indicator 8 (at the fourth step S4, and Fig. 13). If the input section 3 is a mouse, by dropping the target graphic object 1 at the desired position, the target graphic object 1 is moved.

As described above, according to the graphics processing apparatus and the graphics processing method regarding the first embodiment of the present invention, the moving direction of the target graphic object 1 can automatically be determined on the basis of the initial moving direction supplied from the input section 3. In addition, the scale 9 displayed along the moving direction of the target graphic object 1 enables the graphic object 1 to be moved at a more accurate position.

### Second Embodiment of the Present Invention

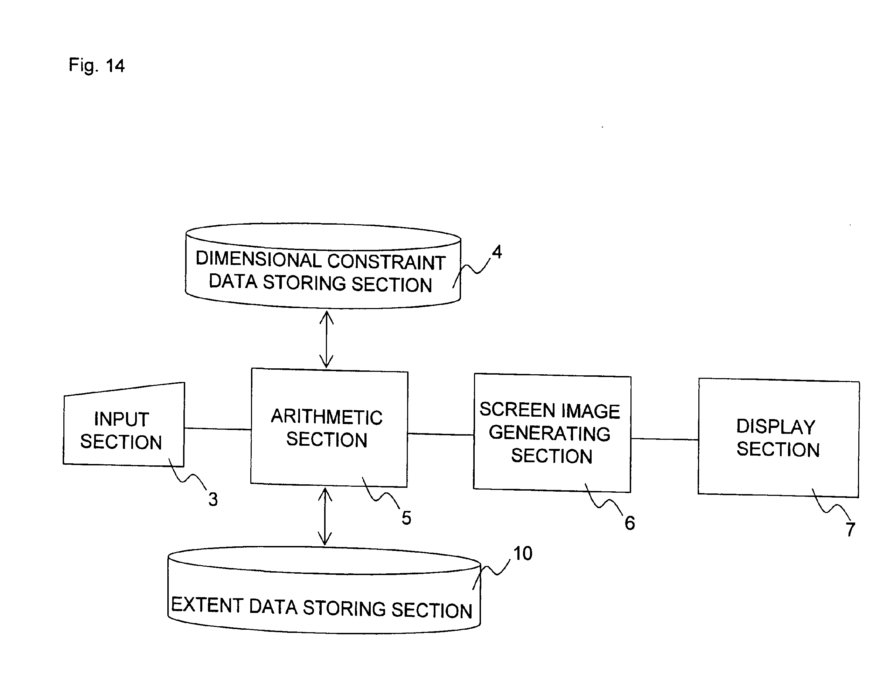

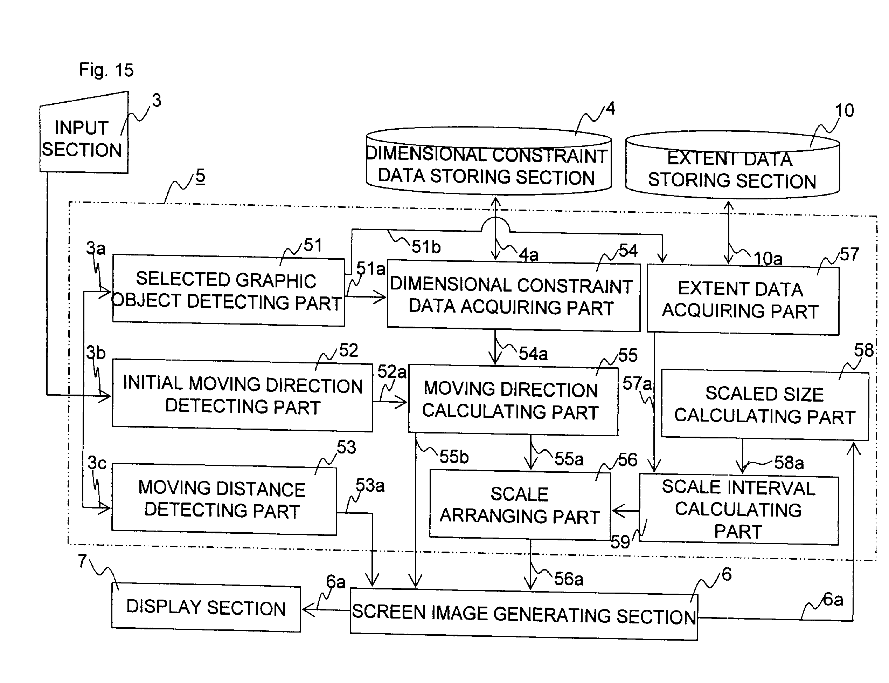

Fig. 14 is a block diagram showing an entire configuration of a graphics processing apparatus in a second embodiment of the present invention. Fig. 15 is a block diagram showing a detailed configuration of an arithmetic section of a graphics processing apparatus shown in Fig. 14. In Fig. 14 and Fig. 15, the same reference numerals as shown in Fig. 1 to Fig. 13 indicate the same or corresponding parts, thus the explanation for those is omitted.

An Extent data storing section 10 is a storage means storing a plurality of extent data 10a.

An arithmetic section 5 includes an extent data acquiring part 57, a scaled size calculating part 58, and a scale interval calculating part 59. The extent data acquiring part 57 acquires the extent data 10a from the extent data storing section 10 on the basis of selected graphic object data 51b supplied from a selected graphic object detecting part 51. The scaled size calculating part 58 calculates a size of the scaled image of the selected graphic object on the basis of data 6a supplied from a screen image generating section 6. The scale interval calculating part 59 calculates a interval of a scale 9 on the basis of a fourth data 57a supplied from the extent data acquiring part 57 and a fifth data 58a supplied from the scaled size calculating part 58.

The graphics processing apparatus in the second embodiment of the present invention differs from that in the first embodiment of the present invention only in having the extent data storing section 10, the extent data acquiring part 57, the scaled size calculating part 58, and the scale interval calculating part 59. The graphics processing apparatus in the second embodiment of the present invention provides the same advantages as that in the first embodiment of the present invention except for the advantages yielded by the extent data storing section 10, the extent data acquiring part 57, the scaled size calculating part 58, and the scale interval calculating part 59, which are described below.

According to the graphics processing apparatus in the second embodiment of the present invention, the interval of the scale 9 is calculated by the scale interval calculating part 59 on the basis of the extent data specific to a target graphic object 1 and the size of the scaled image of the selected graphic object. By displaying the scale having the interval suitable for the size of the target graphic object 1 on the display screen of the display section 7, the target graphic object 1 can be moved to a position that is more accurate.

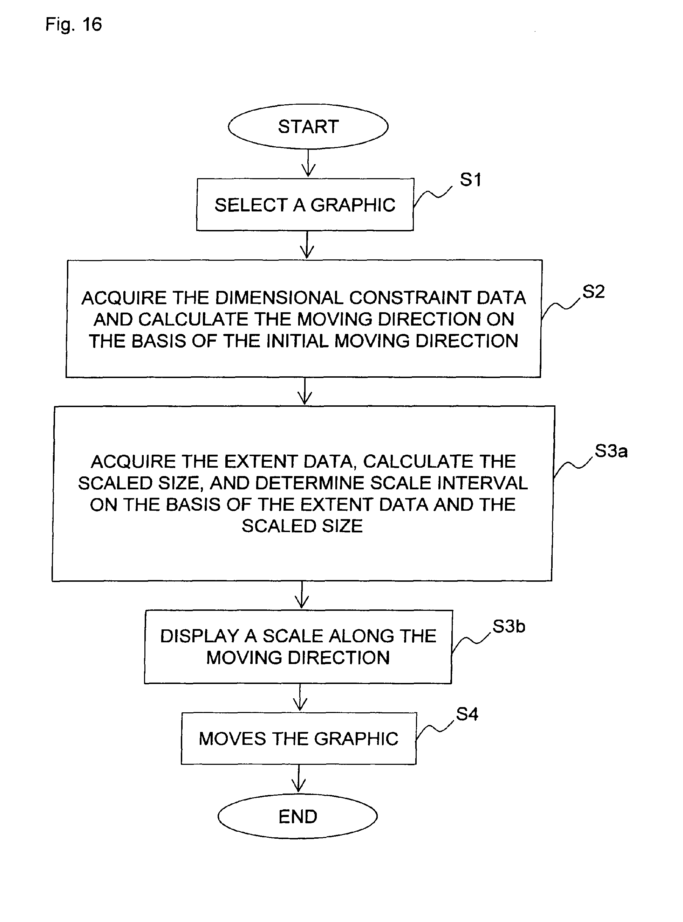

Referring to Fig. 16 to Fig. 23, a process in a graphics processing apparatus and a graphics processing method for performing moving processing of a target graphic object 1 will be described next.

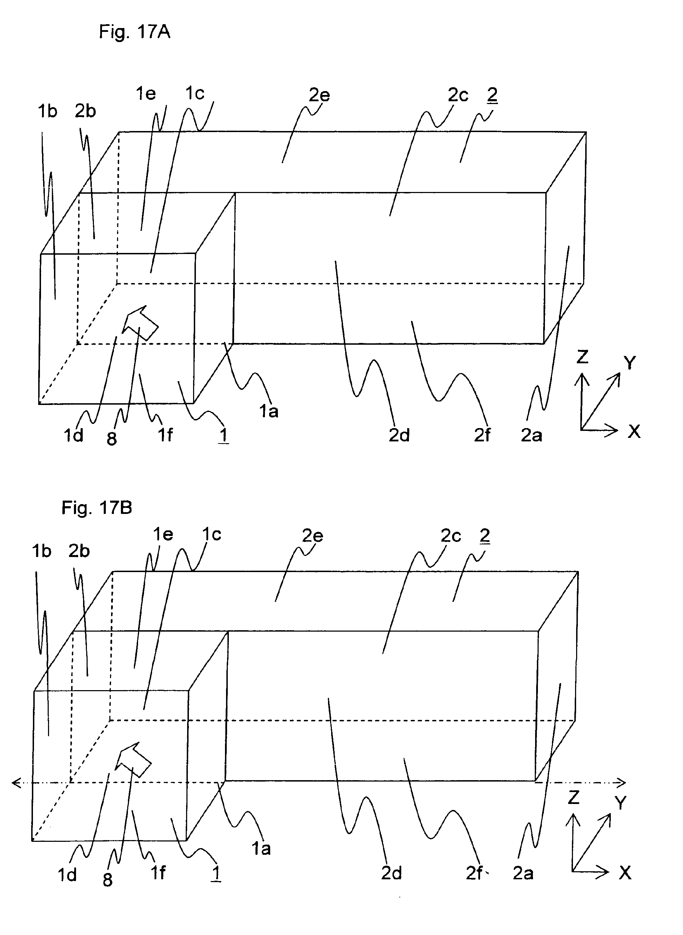

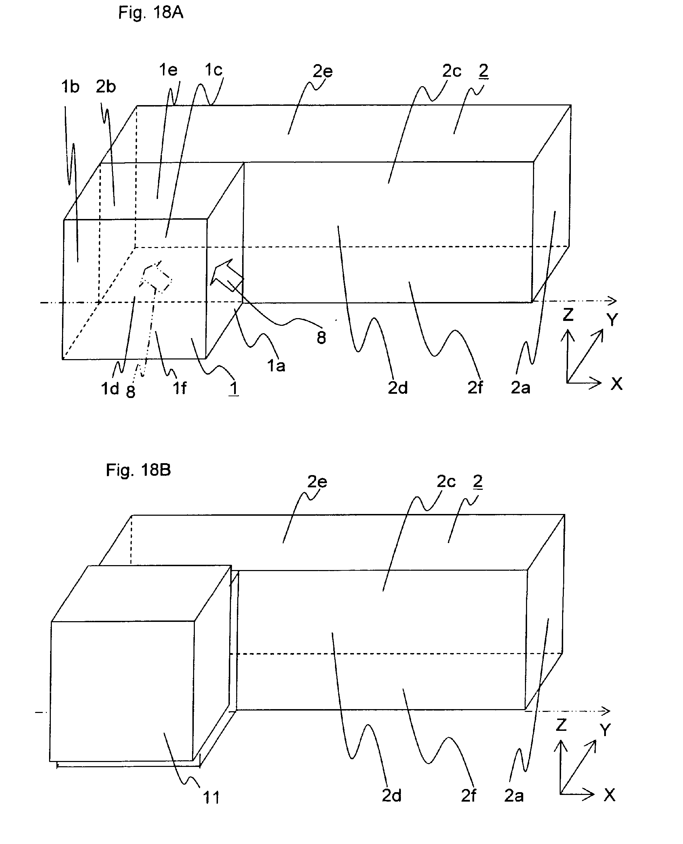

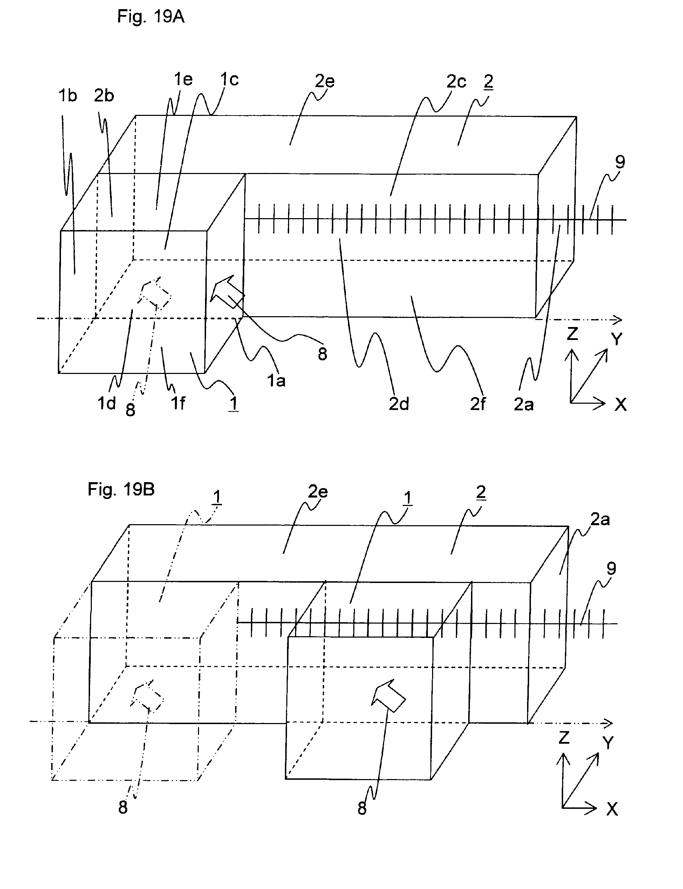

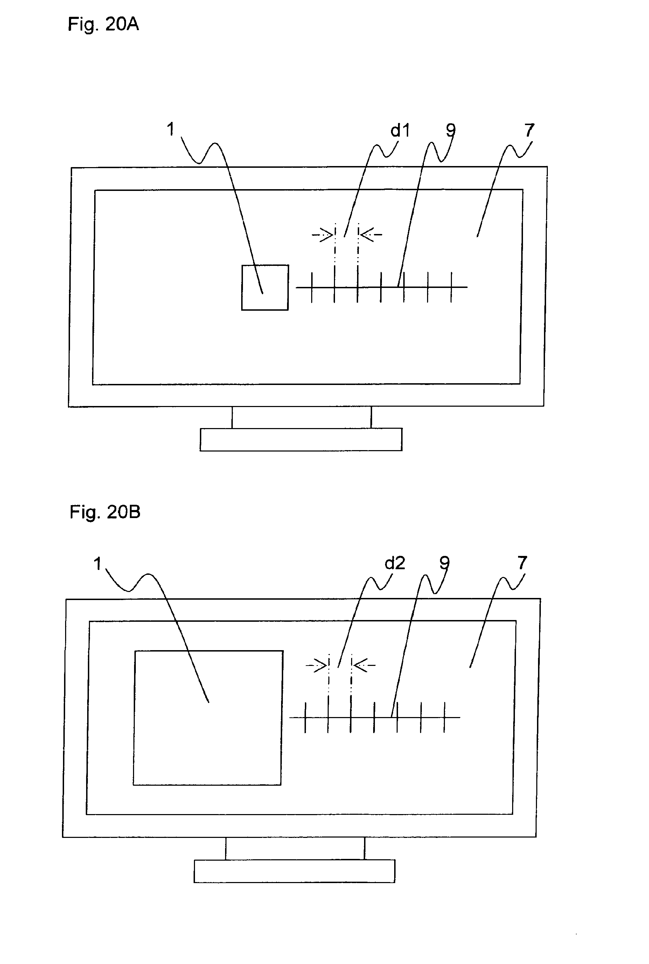

Fig. 16 is a flowchart diagram showing a process in a graphics processing apparatus in a second embodiment of the present invention. Fig. 17A is a diagram showing a moving procedure when a graphic object is translatable, and is an explanatory diagram showing a first step S1. Fig. 17B is a diagram showing a moving procedure when a graphic object is translatable, and is an explanatory diagram showing a second step S2. Fig. 18A is a diagram showing a moving procedure when a graphic object is translatable, and is an explanatory diagram showing a second step S2. Fig. 18B is a diagram showing a moving procedure when a graphic object is translatable, and is an explanatory diagram showing a third-a step S3a. Fig. 19A is a diagram showing a moving procedure when a graphic object is translatable, and is an explanatory diagram showing a third-b step S3b. Fig. 19B is a diagram showing a moving procedure when a graphic object is translatable, and is an explanatory diagram showing a fourth step S4. Fig. 20A is a diagram for explaining intervals of a movement based on a size of the scaled image of the selected graphic object, and is an explanatory diagram showing a state before enlarging the display screen. Fig. 20B is a diagram for explaining intervals of a movement based on a size of the scaled image of the selected graphic object, and is an explanatory diagram showing a state after enlarging the display screen.

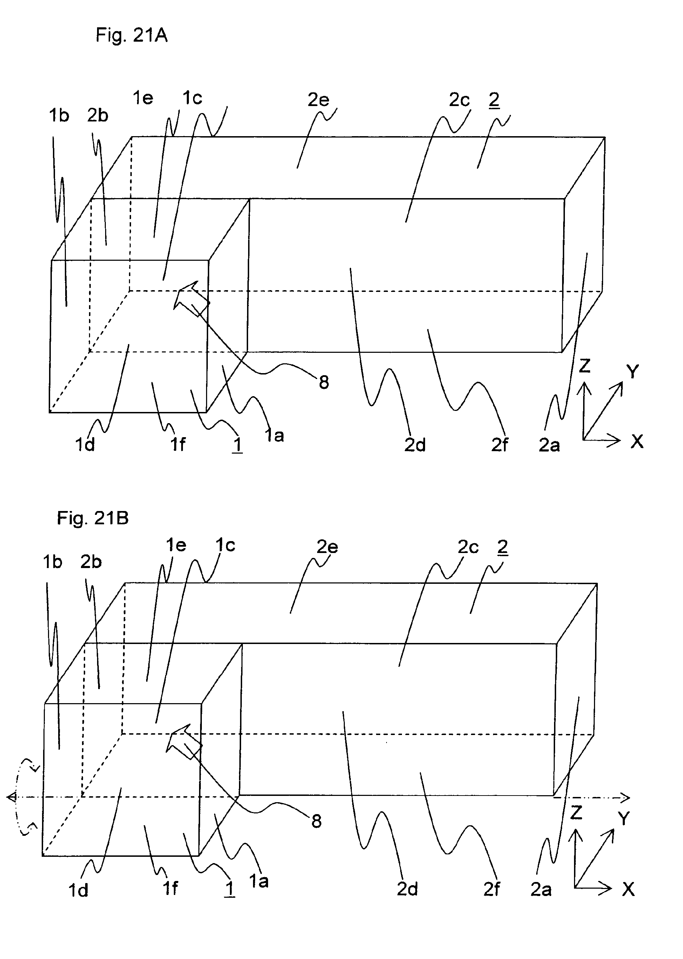

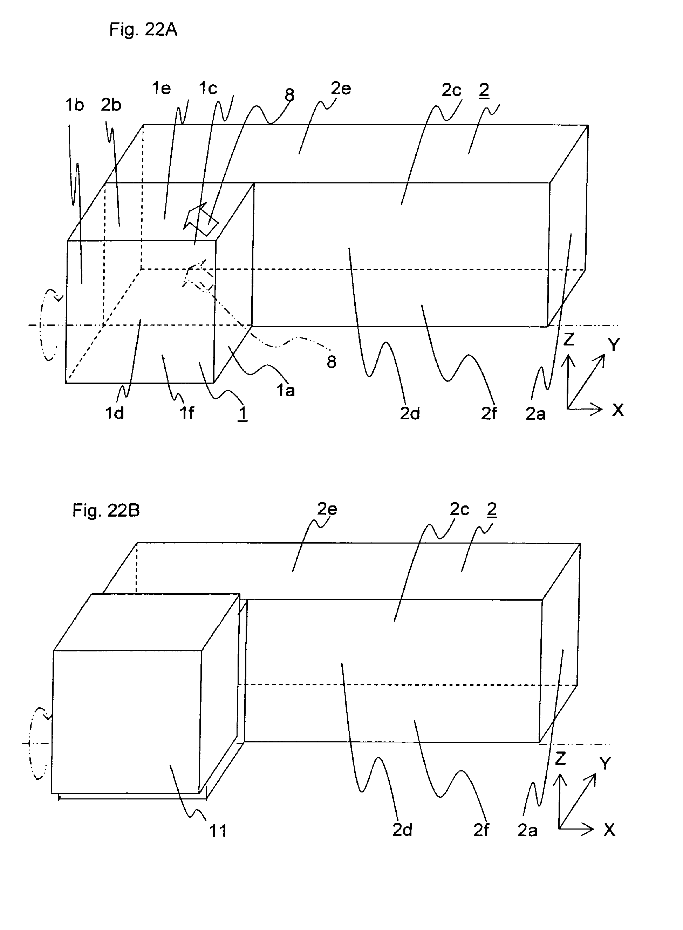

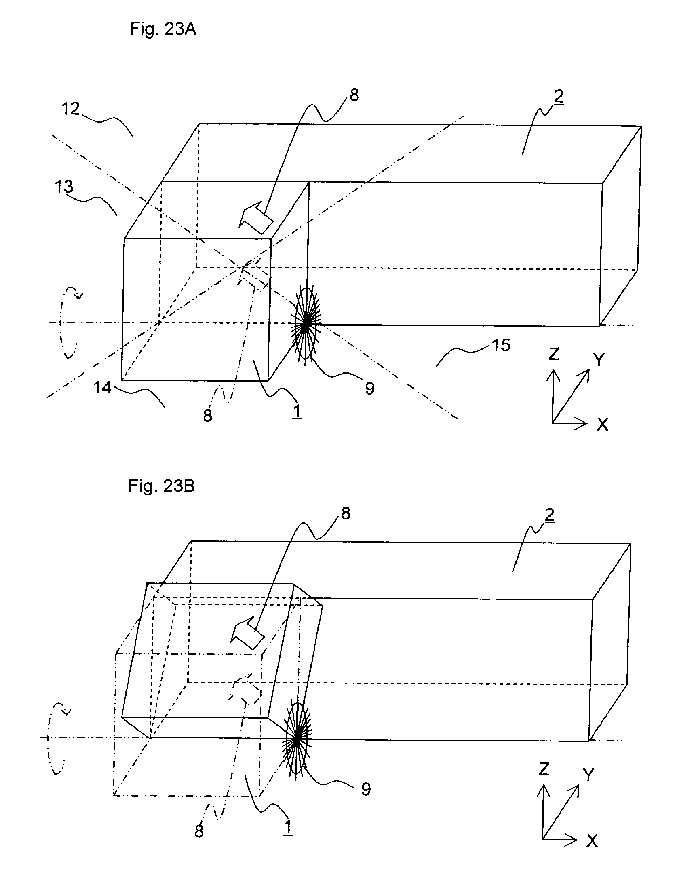

Fig. 21A is a diagram showing a moving procedure when a graphic object is translatable and rotatable, and is an explanatory diagram showing the first step S1. Fig. 21B is a diagram showing a moving procedure when a graphic object is translatable and rotatable, and is an explanatory diagram showing the second step S2. Fig. 22A is a diagram showing a moving procedure when a graphic object is translatable and rotatable, and is an explanatory diagram showing the second step S2. Fig. 22B is a diagram showing a moving procedure when a graphic object is translatable and rotatable, and is an explanatory diagram showing the third-a step S3a. Fig. 23A is a diagram showing a moving procedure when a graphic object is translatable and rotatable, and is an explanatory diagram showing the third-b step S3b. Fig. 23B is a diagram showing a moving procedure when a graphic object is translatable and rotatable, and is an explanatory diagram showing the fourth step S4. In Fig. 16 to Fig. 23, the same reference numerals as shown in Fig. 1 to Fig. 15 indicate the same or corresponding parts, thus the explanation for those is omitted.

First, a user selects a target graphic object 1 on which the user desires to perform the moving processing among graphic objects displayed on a display screen of the display section 7 with the input section 3. In this case, the user selects the target graphic object 1 via the input section 3 while watching an indicator 8 moving on the display screen of the display section 7 in response to data supplied from the input section 3 (at the first step S1, and Fig. 17A).

Next, the arithmetic section 5 acquires dimensional constraint data 4a tied onto the target graphic object 1 from a dimensional constraint data storing section 4. A moving direction calculating part 55 calculates the moving direction of the target graphic object 1 on the basis of an initial moving direction of the indicator 8 relative to the target graphic object 1 (at the second step S2, Fig. 17B, and Fig. 18A).

Meanwhile, in Fig. 17 to Fig. 19, the dimensional constraints enabling the translation only in the X-axis direction are tied onto the target graphic object 1. Thus, if the user moves the indicator 8 so that the initial moving direction of the indicator 8 is the substantially right direction (to the right, above to the right, or below to the right) from the start point on the display screen, the moving direction of the target graphic object 1 is parallel to and the positive direction of the X-axis. In contrast, if the user moves the indicator 8 so that the initial moving direction of the indicator 8 is the substantially left direction (to the left, above to the left, or below to the left) from the start point on the display screen, the moving direction of the target graphic object 1 is parallel to and the negative direction of the X-axis.

Then, the arithmetic section 5 acquires the extent data 10a tied onto the target graphic object 1 from the extent data storing section 10, calculates the size of the scaled image of the selected graphic object on the basis of data 6a supplied from the screen image generating section 6. The arithmetic section 5 calculates a scale interval suitable for the size of the target graphic object 1 on the display screen of the display section 7, on the basis of the acquired extent data and the calculated size of the scaled image of the selected graphic object (at the third-a step S3a, and Fig. 18B). Meanwhile, in Fig. 18B, an extent 11 of 100 cubic millimeters is illustrated.

Here, as shown in Fig. 20A for example, when a scale interval d1 of the scale 9 displayed on the display screen of the display section 7 is 100mm, the intervals of the movement of the target graphic object 1 referring to the scale 9 is limited to the movement by 100mm. Then, as shown in Fig. 20B, when the enlarged target graphic object 1 is displayed, in accordance with the enlarged display, a scale interval d2 is set to 10mm on the basis of the size of the target graphic object 1 and the enlarged display state of the display screen. This enables the target graphic object 1 to be moved by 10mm referring to the scale 9. That is, by determining the scale interval on the basis of the extent 11 of the target graphic object 1 and the scaling state of the display screen, a moving processing corresponding to a small moving interval of the target graphic object 1 can be performed. Accordingly, the target graphic object 1 can be moved to the position that is more accurate.

Then, the display section 7 displays the scale 9 having the calculated scale intervals along the moving direction of the target graphic object 1 (at the third-b step S3b, and Fig. 19A).

Lastly, the user moves the target graphic object 1 to the desired position on the scale 9, which is a guide of the movement, via the input section 3 while watching the indicator 8 (at the fourth step S4, and Fig. 19B).

Next, referring to Fig. 21 to Fig. 23, a process in a graphics processing apparatus and a graphics processing method when dimensional constraints enabling the translation and rotation are tied onto a target graphic object 1 will be described.

First, a user selects a target graphic object 1 on which the user desires to perform the moving processing among graphic objects displayed on a display screen of the display section 7 with the input section 3. In this case, the user selects the target graphic object 1 via the input section 3 while watching an indicator 8 moving on the display screen of the display section 7 in response to data supplied from the input section 3 (at the first step S1, and Fig. 21A).

Next, the arithmetic section 5 acquires dimensional constraint data 4a tied onto the target graphic object 1 from the dimensional constraint data storing section 4. The moving direction calculating part 55 calculates the moving direction of the target graphic object 1 on the basis of the initial moving direction of the indicator 8 relative to the target graphic object 1 (at the second step S2, Fig. 21B, and Fig. 22A).

Meanwhile, in Fig. 21 to Fig. 23, the dimensional constraints enabling the translation in the X-axis direction and the rotation around the X-axis are tied onto the target graphic object 1. Thus, if the user moves the indicator 8 so that the initial moving direction of the indicator 8 is upward from the start point on the display screen, the moving direction of the target graphic object 1 is the negative rotating direction around the X-axis. In contrast, if the user moves the indicator 8 so that the initial moving direction of the indicator 8 is downward from the start point on the display screen, the moving direction of the target graphic object 1 is the positive rotating direction around the X-axis.

Furthermore, if the user moves the indicator 8 so that the initial moving direction of the indicator 8 is the right direction from the start point on the display screen, the moving direction of the target graphic object 1 is parallel to and the positive direction of the X-axis. In contrast, if the user moves the indicator 8 so that the initial moving direction of the indicator 8 is the left direction from the start point on the display screen, the moving direction of the target graphic object 1 is parallel to and the negative direction of the X-axis.

Meanwhile, it is difficult to accurately move the indicator 8 so that the initial moving direction of the indicator 8 becomes exactly upward, downward, to the right, or to the left from the start point on the display screen. Thus, it is preferable to set these directions as an upward area, a downward area, a left area, and a right area. For example, as shown in Fig. 23A, four areas split by two chain lines crossing each other at the start point in the XZ plane are set as a first area 12 for rotating the target graphic object 1 in the negative direction relative to the X-axis, a second area 13 for translating the target graphic object 1 in the negative direction of X-axis, a third area 14 for rotating the target graphic object 1 in the positive direction relative to the X-axis, and a fourth area 15 for translating the target graphic object 1 in the positive direction of the X-axis. By this, the translation direction and the rotation direction of the target graphic object 1 can be easily designated.

In addition, when the moving processing of the translation and rotation is simultaneously performed, for example, the initial moving direction of the indicator 8 is divided into directions in the X-axis and the Z-axis. The positive or negative direction of the translation is determined on the basis of the divided direction on the X-axis relative to the start point. The positive or negative direction of the rotation is determined on the basis of the divided direction on the Z-axis relative to the start point.

Then, the arithmetic section 5 acquires the extent data 10a tied onto the target graphic object 1 from the extent data storing section 10, calculates the size of the scaled image of the selected graphic object on the basis of data 6a supplied from the screen image generating section 6. The arithmetic section 5 calculates a scale interval suitable for the size of the target graphic object 1 on the display screen of the display section 7, on the basis of the acquired extent data and the calculated size of the scaled image of the selected graphic object (at a third-a step S3a, and Fig. 22B).

Then, the display section 7 displays the scale 9 having the calculated scale intervals along the moving direction of the target graphic object 1 (at the third-b step S3b, and Fig. 23A). More specifically, in Fig. 23A, the angle scale 9 is displayed along the moving direction of the target graphic object 1, i.e., the negative rotating direction around the X-axis.

Accordingly, when the moving processing of the translation and rotation is simultaneously performed, the initial moving direction of the indicator 8 is divided into two directions. On the basis of the obtained translating direction and rotating direction, for example, a length scale is displayed along the direction parallel to the X-axis and an angle scale is displayed along the rotating direction around the X-axis.

Lastly, the user moves the target graphic object 1 to the desired position on the scale 9, which is a guide of the movement, via the input section 3 while watching the indicator 8 (at the fourth step S4, and Fig. 23B).

As described above, according to the graphics processing apparatus and the graphics processing method regarding the second embodiment of the present invention, the moving direction of the target graphic object 1 can be determined automatically on the basis of the initial moving direction supplied from the input section 3. In addition, by displaying the scale 9 having intervals suitable for the size of the target graphic object 1 on the display screen of the display section 7, along the moving direction of the target graphic object 1, the graphic object 1 can be moved to the position that is more accurate.

Meanwhile, in the embodiments 1 and 2, the translation, the rotation, and the translation and rotation with respect to the X-axis are described. Likewise, by tying dimensional constraints corresponding to the moving conditions onto the target graphic object 1, the moving processing such as translation, rotation, and translation and rotation with respect to the Y-axis and Z-axis can be performed on the target graphic object 1.

The graphics processing apparatus according to the embodiments described above may be implemented in hardware or in computer software. For example, a program for allowing a computer to execute functions of the selected graphic object detecting part 51, the initial moving direction detecting part 52, the moving distance detecting part 53, the dimensional constraint data acquiring part 54, the moving direction calculating part 55, and the scale arranging part 56 shown in Fig. 9 is created so that the arithmetic section 5 shown in Fig. 8 can be implemented by loading the program in a memory of the computer and executing the program.

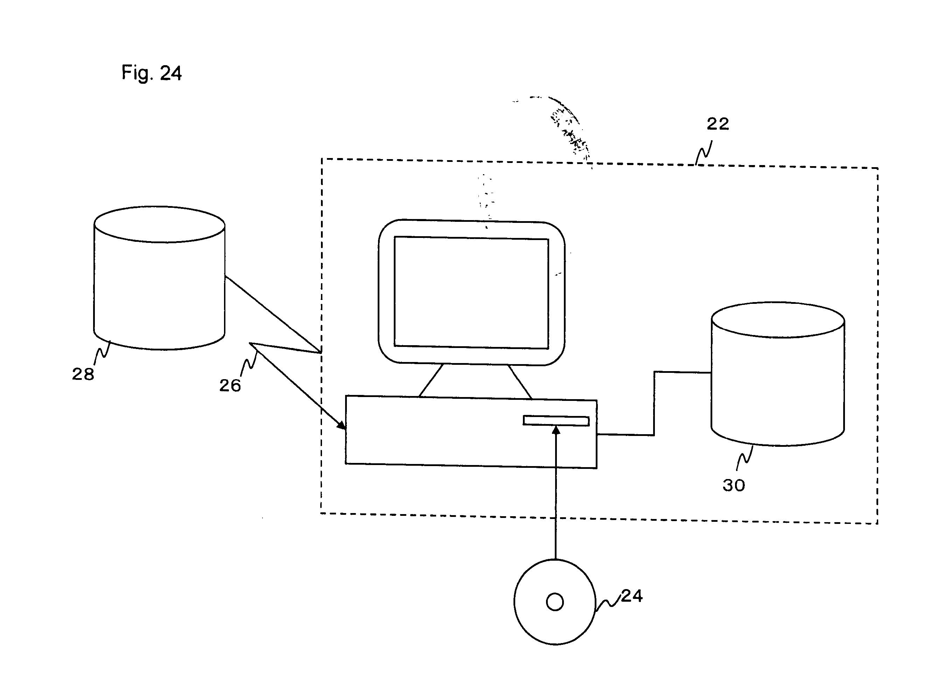

The program for implementing a graphics processing apparatus according to the embodiments may be stored in a portable recording medium 24 such as a CD-ROM, a CD-RW, a DVD-R, a DVD-RAM, a DVD-RW, or a flexible disk, a storage device 28 provided at the other end of a communication circuit 26, a storage device such as a hard disk, a RAM, or the like of a computer system 22, or a recording medium 30 of the computer system 22, as shown in Fig. 24. When the program is executed, the program is loaded and executed on a main memory. A program embodying the present invention need not be carried by a recording medium or storage medium. For example, the carrier medium may be a signal such as a download signal transmitted from a server to a user terminal. The appended program claims are to be interpreted as covering a program by itself or when carried on or by any carrier medium. The carrier medium may be a storage medium, recording medium or a signal.

## Claims

1. An apparatus for processing data representing a graphic including a plurality of objects, said apparatus comprising:
an input means for allowing a user to select at least one of the objects and to input movement data indicative of movement of the selected object;
a constraint data storing means for storing constraint data of dimensional constraint conditions of the objects, said dimensional constraint conditions restricting relative movement of the objects; and
an arithmetic means for determining actual movement of the selected object on the basis of the movement data and the constraint data.

2. The apparatus according to claim 1, wherein
the arithmetic means further generates data representing an arrangement of a scale along a moving direction of the selected object.

3. The apparatus according to claim 2, further comprising
an extent data storing means for storing extent data representing extents of the objects,
wherein
the arithmetic means further generates data representing scaled image of the selected object, and determines an interval of the scale on the basis of a size of the scaled image and the extent data of the selected object.

4. The apparatus according to claim 1, wherein
the dimensional constraint conditions include an arrangement condition that regulates at least two of the plurality of objects to be in a specific relative location each other.

5. The apparatus according to claim 4, wherein
the arrangement condition is that a line segment of a first of the objects and a line segment of a second of the objects lie in parallel.

6. The apparatus according to claim 4, wherein
the arrangement condition is that a line segment of a first of the objects and a line segment of a second of the objects lie on a common line.

7. The apparatus according to claim 4, wherein
the arrangement condition is that a surface of a first of the objects and a surface of a second of the objects lie in parallel.

8. The apparatus according to claim 4, wherein
the arrangement condition is that a surface of a first of the objects and a surface of a second of the objects lie on a common plane.

9. A method carried out by an apparatus for processing data representing a graphic including a plurality of objects, said method comprising:
a step of storing constraint data of dimensional constraint conditions of the objects in a first storage means, said dimensional constraint conditions restricting relative movement of the objects;
a step of allowing a user to select at least one of the objects, and to input movement data indicative of movement of the selected object;
a step of acquiring the constraint data from the constraint data storing means; and
a step of determining actual movement of the selected object on the basis of the movement data and the constraint data.

10. The method according to claim 9, further comprising
a step of generating data representing an arrangement of a scale along a moving direction of the selected object.

11. The method according to claim 10, further comprising:
a step of storing extent data representing extents of the objects in a second storage means;
a step of acquiring the extent data from the extent data storing means,
a step of generating data representing scaled image of the selected object, and
a step of determining an interval of the scale on the basis of a size of the scaled image and the extent data of the selected object.

12. The method according to claim 9, wherein
the dimensional constraint conditions include an arrangement condition that regulates at least two of the plurality of objects to be in a specific relative location each other.

13. The method according to claim 12, wherein
the arrangement condition is that a line segment of a first of the objects and a line segment of a second of the objects lie in parallel.

14. The method according to claim 12, wherein
the arrangement condition is that a line segment of a first of the objects and a line segment of a second of the objects lie on a common line.

15. The method according to claim 12, wherein
the arrangement condition is that a surface of a first of the objects and a surface of a second of the objects lie in parallel.

16. The method according to claim 12, wherein
the arrangement condition is that a surface of a first of the objects and a surface of a second of the objects lie on a common plane.

17. A computer program which, when run on a computer, causes the computer to perform method steps of a method for processing data representing a graphic including a plurality of objects, said method comprising:
a step of storing constraint data of dimensional constraint conditions of the objects in a first storage means, said dimensional constraint conditions restricting relative movement of the objects;
a step of allowing a user to select at least one of the objects, and to input movement data indicative of movement of the selected object;
a step of acquiring the constraint data from the first storage means; and
a step of determining actual movement of the selected object on the basis of the movement data and the constraint data.

18. The computer program according to claim 17, said method further comprising
a step of generating data representing an arrangement of a scale along a moving direction of the selected object.

19. The computer program according to claim 18, said method further comprising:
a step of storing extent data representing extents of the objects in a second storage means;
a step of acquiring the extent data from the second storage means,
a step of generating data representing scaled image of the selected object, and
a step of determining an interval of the scale on the basis of a size of the scaled image and the extent data of the selected object.

20. The computer program according to claim 19, wherein
the dimensional constraint conditions include an arrangement condition that regulates at least two of the plurality of objects to be in a specific relative location each other.
